# EUROPÄISCHE PATENTSCHRIFT

(11) **EP 2 509 080 B1**
(45) Veröffentlichungstag und Bekanntmachung des Hinweises auf die Patenterteilung: **03.06.2015**
(21) Anmeldenummer: 11305386.2
(22) Anmeldetag: 04.04.2011
(51) Int. Cl.: H01B 12/06, H01B 12/14

(54) **Supraleitfähiges Kabel**
Superconducting cable
Câble supraconducteur

(43) Veröffentlichungstag der Anmeldung: 10.10.2012
(73) Patentinhaber: Nexans, 75008 Paris (FR)
(72) Erfinder: Stemmle, Mark, 30625 Hannover (DE); Soika, Rainer, 30559 Hannover (DE)
(74) Vertreter: Döring, Roger

(56) Entgegenhaltungen:
- WO-A2-03/012460
- US-A1- 2002 098 985
- US-A1- 2010 179 064

## Beschreibung

Die Erfindung betrifft ein supraleitfähiges elektrisches Kabel, bei dem konzentrisch angeordnete supraleitende Phasenleiter, insbesondere drei konzentrisch angeordnete supraleitende Phasenleiter mit zwischen diesen angeordneter elektrischer Isolierung in einem Kryostat angeordnet sind. Die Phasenleiter und die zwischen diesen angeordneten Isolierungen sind um einen Kühlkanal angeordnet, der vorzugsweise einen ringförmigen Querschnitt aufweist. Der Kryostat eines gattungsgemäßen Kabels weist zwei konzentrisch angeordnete Mäntel auf, die Wellrohre sind vorzugsweise aus Metall, insbesondere aus Edelstahl, mit zwischen diesen angeordneten Abstandshaltern und/oder einer Isolierung, wobei der Zwischenraum zwischen den Mänteln evakuiert ist. Innerhalb des Kryostats liegen die konzentrisch angeordneten Phasenleiter und sind in Kontakt mit einem Kühlmedium, insbesondere flüssigem Stickstoff.

### Stand der Technik

Die WO 2004/013868 beschreibt ein supraleitendes Kabel mit drei koaxialen Phasenleitern, zwischen denen jeweils eine Isolierschicht angeordnet ist. Der äußere Phasenleiter ist von einer weiteren Isolierschicht umgeben, auf der eine Schirmung aus Kupfer aufliegt. Diese Kabelseele ist einschließlich ihrer umfänglichen Schirmung in einem Kryostat angeordnet.

Ein weiteres supraleitendes Kabel mit drei koaxialen Phasenleitern und einem Nullleiter ist aus WO 03/012460 bekannt.

### Aufgabe der Erfindung

Die Aufgabe der Erfindung liegt in der Bereitstellung eines supraleitfähigen Kabels, das einen alternativen Aufbau hat, und insbesondere bei gleichem Durchmesser der konzentrischen supraleitfähigen Phasenleiter einen geringeren Innendurchmesser des Kryostats erlaubt.

### Allgemeine Beschreibung der Erfindung

Die Erfindung löst diese Aufgabe mit einem Kabel gemäß der Ansprüche, und insbesondere mit einem supraleitfähigen elektrischen Kabel, bei dem in einem Kryostat, der zwei konzentrisch angeordnete Wellrohre mit einem Vakuum im Zwischenraum aufweist, eine Kabelseele angeordnet ist, die aus drei konzentrisch um einen inneren Kühlkanal angeordneten Phasenleitern mit zwischen diesen angeordneter elektrischer Isolierung besteht, und der Kryostat von einer elektrischen Isolierung umfasst ist, insbesondere einer extrudierten oder gewickelten Isolierschicht, welche von einem Neutralleiter aus normal leitendem Material, insbesondere Kupfer umfasst ist. Bei diesem Kabel ist ein Neutralleiter bzw. eine Schirmung nur außerhalb des Kryostats angeordnet, und wird durch normalleitendes Material gebildet, das als gemeinsamer Neutralleiter den Kryostat umgibt, wobei zwischen diesem Neutralleiter und dem Kryostat ein Isoliermaterial angeordnet ist.

Die Kabelseele kann aus zwei, vorzugsweise drei konzentrisch um einen gemeinsamen Kühlkanal angeordneten supraleitenden Phasenleitern bestehen, sodass erfindungsgemäß innerhalb des Kryostats eine Isolierung nur jeweils zwischen den Phasenleitern angeordnet ist, und beispielsweise der äußere Phasenleiter ohne umfängliche Isolierung innerhalb des Kryostats angeordnet ist, und auch zwischen dem inneren Kühlkanal und dem darauf aufliegenden, innenliegenden supraleitenden Phasenleiter im Wesentlichen kein Isoliermaterial angeordnet ist.

Erfindungsgemäß ist die Isolierung, die daraus besteht, dass zwischen den konzentrischen supraleitenden Phasenleitern Isoliermaterial angeordnet ist, ein so genanntes kaltes Dielektrikum, d.h. ein Isoliermaterial, das von Kühlmittel durchdrungen bzw. imprägniert ist, insbesondere mit flüssigem Stickstoff. Ein solches kaltes Dielektrikum bildet eine effektive Isolierung zwischen den Phasenleitern.

Der erfindungsgemäße Aufbau des Kabels hat den Vorteil, dass die im Kryostat angeordnete Kabelseele einen geringen Außendurchmesser hat, da die Kabelseele aus einem Kühlkanal, einem auf diesem aufliegenden ersten supraleitenden Phasenleiter, einem ersten Dielektrikum auf dem ersten Phasenleiter, einem konzentrisch um die erste Isolierung angeordneten zweiten supraleitenden Phasenleiter, einer zweiten, den zweiten Phasenleiter konzentrisch umfassenden zweiten Isolierung und einem auf der zweiten Isolierung konzentrisch angeordneten dritten supraleitenden Phasenleiter bestehen kann, sodass die Kabelseele z.B. keine umfängliche, auf dem dritten Phasenleiter angeordnete Isolierung und/oder eine Schirmung umfasst, welche den Gesamtdurchmesser der Kabelseele gegenüber dem Durchmesser des äußeren Phasenleiters erhöht.

Die Kabelseele des erfindungsgemäßen Kabels erlaubt daher, dass der Kryostat einen geringeren Innendurchmesser hat als er für eine Kabelseele mit größerem Außendurchmesser erforderlich wäre. Daher weist das erfindungsgemäße Kabel einen geringeren Wärmeeintrag auf, als ein Kabel mit einem Kryostat größeren Innendurchmesser. In Alternative zu einem Kryostat mit geringerem Innendurchmesser kann das erfindungsgemäße Kabel einen Kryostat aufweisen, dessen Innendurchmesser eine Kabelseele mit größerem Durchmesser aufnehmen kann, so dass der äußere Kühlkanal zwischen Kryostat und Kabelseele einen größeren Querschnitt aufweist.

Ein weiterer Vorteil ergibt sich beim erfindungsgemäßen Kabel dadurch, dass die Schirmung außerhalb des Kryostats angeordnet ist und daher anfallende Verlustwärme nicht durch das Kühlmittel abgeführt werden muss, das durch den Kryostat strömt. Weiterhin ermöglicht die Anordnung des Neutralleiters bzw. Schirms außerhalb des Kryostats, dass der Neutralleiter aus einem normalleitenden Material besteht, beispielsweise aus Kupfer.

Beim erfindungsgemäßen Kabel wird Wärme, die aus Ausgleichsströmen im Neutralleiter erzeugt wird, außerhalb des Kryostats erzeugt, so dass diese Wärme nicht über das im Kryostat enthaltene Kühlmittel abgeführt wird. Daher führt die Anordnung des Neutralleiters außerhalb des Kryostats zu einer geringeren Belastung der Kühleinrichtung, die das Kühlmittel bereitstellt bzw. kühlt.

Weiterhin fällt auch die Wärme, die durch dielektrische Verluste innerhalb der Isolierung erzeugt wird, die den äußeren Phasenleiter der Kabelseele umgibt, außerhalb des Kryostats an. Entsprechend ergibt sich in der erfindungsgemäßen Ausführungsform, in der die Kabelseele keine umfängliche Isolierung aufweist, sondern die Isolierung außerhalb des Kryostats angeordnet ist, ein geringer Wärmeeintrag ins Kühlmedium. Dabei kann der äußere Phasenleiter der Kabelseele unmittelbar den Kryostaten kontaktieren, oder die Kabelseele weist eine auf dem äußeren Phasenleiter eine umfängliche Schutzschicht auf, die den Kryostaten kontaktiert.

Da das Kabel eine Kabelseele enthält, die vorzugsweise keine auf ihrem äußeren Phasenleiter aufliegende Isolierung aufweist, wird der Gesamtdurchmesser der Kabelseele durch den inneren Kühlkanal, den darauf aufliegenden ersten supraleitenden Phasenleiter und die konzentrischen weiteren supraleitenden Phasenleiter mit jeweils zwischen diesen angeordneter Isolierung gebildet, so dass keine den äußeren Phasenleiter umfassende Isolierung zum Gesamtdurchmesser der Kabelseele beiträgt. Diese Kabelseele erzeugt bei Temperaturänderungen, z.B. beim Kühlen von Umgebungstemperatur auf die Temperatur des Kühlmittels, geringere Längskräfte als eine Kabelseele mit einer größeren Anzahl von Schichten. Daher treten beim erfindungsgemäßen Kabel geringere Kräfte bei Temperaturänderungen auf, als bei Kabeln mit dickerer Kabelseele, was für die Anforderungen an die Belastbarkeit z.B. des Kryostats und die Haltbarkeit vorteilhaft ist.

Die Isolierung, die zwischen dem außen liegenden, die äußerste Schicht bildenden gemeinsamen Neutralleiter und der äußeren Wandung des Kryostats liegt, kann aus Polymermaterial bestehen, mit dem der Kryostat umspritzt und/oder umwickelt ist.

Die im Kryostat angeordnete Kabelseele weist auf oder besteht aus einem inneren Kühlkanal, auch als Träger bezeichnet, einem darauf aufliegenden ersten supraleitenden Phasenleiter, ein auf dem ersten supraleitenden Phasenleiter aufliegendes erstes Dielektrikum, ein auf dem ersten kalten Dielektrikum aufliegenden zweiten supraleitenden Phasenleiter, ein diesen zweiten supraleitenden Phasenleiter umfassendes zweites kaltes Dielektrikum und auf dem zweiten kalten Dielektrikum und gegenüber des zweiten supraleitenden Phasenleiters einen dritten supraleitenden Phasenleiter. Kaltes Dielektrikum kann z.B. aus mehreren umeinander gewickelten Papierlagen, beispielsweise mit Kunststoff, z.B. Polypropylen, laminiertes Papier sein, das vom Kühlmittel, insbesondere flüssigem Stickstoff durchdringbar ist. Der innere Kühlkanal ist z.B. ein Rohr mit kreisförmigem bzw. ringförmigem Querschnitt, das optional eine ringförmige oder wendelförmige radiale Wellung aufweist, und insbesondere aus Metall, beispielsweise aus Kupfer, Messing oder Edelstahl ist.

Der supraleitende Phasenleiter besteht vorzugsweise aus einem oder mehreren Bändern mit oder aus supraleitenden Material, beispielsweise Bändern mit einem Träger und einer Schicht aus supraleitendem Material, wobei die Bänder parallel zueinander und dicht aneinander mit einer Schlaglänge, die vorzugsweise groß ist, um die Längsachse des inneren Kühlkanals gewickelt sind, optional in mehreren Schichten. Jeder supraleitende Phasenleiter kann mit gleichgerichtetem oder gegenläufigem Schlag und wahlweise zwischen den Schichten angeordnetem, nicht leitenden Material gewickelt sein, die einen Phasenleiter bilden.

Weiterhin betrifft die Erfindung ein Verfahren zur Herstellung des erfindungsgemäßen supraleitfähigen Kabels. Bei diesem Herstellungsverfahren wird die Kabelseele hergestellt und anschließend in einen Kryostat angeordnet, z.B. durch Einziehen der Kabelseele in einen vorgefertigten Kryostat mit zwei beabstandeten, konzentrisch angeordneten Mänteln, vorzugsweise aus Metall, mit zwischen diesen angeordneten Abstandshaltern und/oder Isolierung, wobei der Zwischenraum zwischen den Mänteln evakuiert ist. Bei dem Verfahren wird die Kabelseele vorzugsweise durch Anordnen von supraleitfähigen Bändern um einen inneren Kühlkanal zur Erzeugung eines ersten supraleitfähigen Phasenleiters, Anordnen einer ersten Isolierung um den ersten supraleitfähigen Phasenleiter, Anordnen von supraleitfähigen Bändern um die erste Isolierung zur Erzeugung eines zweiten supraleitfähigen Phasenleiters, Anordnen einer zweiten Isolierung um den zweiten supraleitfähigen Phasenleiter und Anordnen von supraleitfähigen Bändern um die zweite Isolierung zur Erzeugung eines dritten supraleitfähigen Phasenleiters erzeugt. Der Kryostat wird vor oder nach Anordnen der Kabelseele in diesem mit einer dritten Isolierung versehen, z.B. durch Umspritzen und/oder Umwickeln der äußeren Umfangsfläche des Kryostats mit einem vernetzten Polymer, und anschließend mit einem auf der dritten Isolierung aufliegenden Metallmantel umgeben, der den gemeinsamen Neutralleiter bildet und die äußere Oberfläche des Kabels bildet. Der Metallmantel kann durch Umwickeln der dritten Isolierung mit Metallbändern hergestellt werden, die beispielsweise mit einer langen Schlaglänge ein- oder mehrlagig angeordnet sind. Optional wird um den Neutralleiter eine weitere isolierende Schicht aufgebracht, die beispielsweise aus extrudiertem Kunststoff, insbesondere PE besteht.

Vorzugsweise werden die erste und zweite Isolierung durch Umwickeln mit Isoliermaterial auf Papierbasis erzeugt. Der innere Kühlkanal ist vorzugsweise ein Wellrohr aus Edelstahl mit ringförmigem Querschnitt.

### Genaue Beschreibung der Erfindung

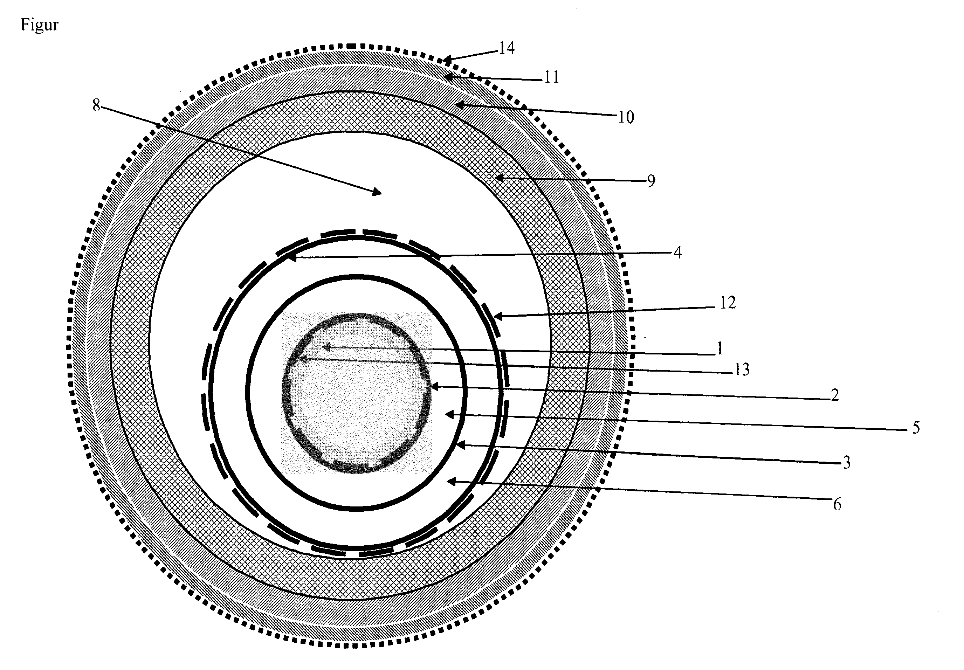

Die Erfindung wird nun genauer mit Bezug auf die Figur beschrieben, die schematisch einen Querschnitt durch ein erfindungsgemäßes Kabel zeigt.

Beim erfindungsgemäßen Kabel besteht die Kabelseele aus einem inneren Kühlkanal 1, beispielsweise einem Rohr aus kupferhaltigem Werkstoff, insbesondere mit rundem Querschnitt, auf dem unmittelbar oder durch eine dünne Schutzschicht 13 getrennt ein erster supraleitender Phasenleiter 2 aufliegt, der beispielsweise aus supraleitenden Bändern besteht, die mit langer Schlaglänge um den inneren Kühlkanal 1 gewickelt sind. Konzentrisch zum ersten supraleitenden Phasenleiter 2 ist ein zweiter supraleitender Phasenleiter 3 und ein diesen umfassender konzentrischer dritter supraleitender Phasenleiter 4 angeordnet, wobei der erste supraleitende Phasenleiter 2 vom zweiten supraleitenden Phasenleiter 3 durch die zwischen diesen angeordnete erste elektrische Isolierung 5 beabstandet ist, und der dritte supraleitende Phasenleiter 4 durch eine zwischen diesem und dem zweiten supraleitenden Phasenleiter 3 angeordnete zweite elektrische Isolierung 6 beabstandet ist. Die erste und zweite elektrische Isolierung 5, 6 sind jeweils von einem kalten Dielektrikum gebildet, insbesondere von einem gewickelten Dielektrikum auf Papierbasis, das von Kühlmittel durchdrungen ist, insbesondere mit flüssigem Stickstoff imprägniert ist. Die optionale Schutzschicht 13, die auf dem inneren Kühlkanal 1 aufliegt und an den ersten supraleitenden Phasenleiter 2 angrenzt, kann z.B. Papier, insbesondere Rußpapier oder metallische Bänder, beispielsweise aus Edelstahl, sowie eine Kombination aus beiden aufweisen oder aus einem dieser bzw. aus deren Kombination bestehen. Der dritte supraleitende Phasenleiter 4 ist auf der der zweiten Isolierung 6 gegenüberliegenden Oberfläche nicht isoliert und weist daher keine umfänglich geschlossene Isolierung gegenüber dem Kryostaten 9 auf. Der dritte supraleitende Phasenleiter 4 kann unmittelbar auf der Innenwandung des Kryostats 9 aufliegen, welcher von zwei konzentrisch angeordneten Mänteln mit zwischen diesen liegender Isolierung mit einem Vakuum gebildet ist. Alternativ kann um den dritten supraleitenden Phasenleiter 4 eine dünne Schutzschicht 12 aufgebracht sein, die entweder metallisch oder nicht metallisch ausgeführt sein kann. Diese optionale dünne Schutzschicht 12 bildet die äußere Umfangsfläche der Kabelseele und kann wie die auf dem inneren Kühlkanal aufliegende Schutzschicht 13 ausgebildet sein. Alternativ oder zusätzlich zu einer Schicht aus Papier kann die auf dem dritten supraleitenden Phasenleiter 4 aufliegende Schutzschicht 12 zumindest ein gewickeltes metallisches Band aufweisen oder daraus bestehen, z.B. ein Bronzeband. Ein als Schutzschicht 12 auf dem dritten supraleitenden Phasenleiter 4 oder auf dem um diesen gewickelten Papier gewickeltes metallisches Band ist vorzugsweise nicht sich selbst überlappend gewickelt.

Erfindungsgemäß besteht die Kabelseele vorzugsweise von innen nach außen aus einem konzentrisch um den inneren Kühlkanal 1 angeordnetem ersten supraleitenden Phasenleiter 2, einer ersten elektrischen Isolierung 5, einem zweiten supraleitenden Phasenleiter 3, einer zweiten elektrischen Isolierung 6 und einem drittem supraleitenden Phasenleiter 4. Der Abstand zwischen der äußeren Umfangsfläche der Kabelseele und der Innenwandung des Kryostats 9 bildet einen äußeren Kühlkanal 8, durch den ebenso wie durch den inneren Kühlkanal 1 Kühlmedium strömen gelassen werden kann.

Erfindungsgemäß ist der Kryostat 9 von einem um eine elektrische Isolierung 10 beabstandeten Neutralleiter 11 umfasst. Um den Neutralleiter 11 kann generell eine isolierende Schutzschicht 14, beispielsweise extrudierter Kunststoff, z.B. PE (Polyethylen), aufgebracht sein. Die Konstruktion der Kabelseele des erfindungsgemäßen Kabels hat einen geringen Außendurchmesser, sodass der lichte innere Durchmesser des Kryostats 9 im Vergleich mit gattungsgemäßen vorbekannten Supraleiterkabeln geringer sein kann. Die in dem die Außenwandung des Kabels bildenden Neutralleiter 11 erzeugte Verlustwärme entsteht außerhalb des Kryostats 9, wie auch die Verlustwärme in der dritten elektrischen Isolierung 10, die vorzugsweise aus Kunststoff besteht. Beim erfindungsgemäßen Kabel kann daher die dritte elektrische Isolierung 10, die den Abstand zwischen Kryostat 9 und Neutralleiter 11 ausfüllt, sowohl eine dritte elektrische Isolierung 10 bilden, als auch eine thermische Isolierung zwischen Kryostat 9 und Neutralleiter 11.

### Bezugszeichenliste:

- 1: innerer Kühlkanal
- 2: erster supraleitender Phasenleiter
- 3: zweiter supraleitender Phasenleiter
- 4: dritter supraleitender Phasenleiter
- 5: erste elektrische Isolierung
- 6: zweite elektrische Isolierung
- 8: äußerer Kühlkanal
- 9: Kryostat
- 10: dritte elektrische Isolierung
- 11: Neutralleiter
- 12: Schutzschicht
- 13: Schutzschicht
- 14: isolierende Schutzschicht

## Patentansprüche

1. Supraleitfähiges Kabel mit einem Kryostat (9) und einer darin angeordneten Kabelseele, die um einen inneren Kühlkanal (1) von innen nach außen konzentrisch einen ersten supraleitenden Phasenleiter (2), eine erste elektrische Isolierung (5), einen zweiten supraleitenden Phasenleiter (3), eine zweite elektrische Isolierung (6) und einen dritten supraleitenden Phasenleiter (4) aufweist, **dadurch gekennzeichnet, dass** der Kryostat (9) von einer dritten elektrischen Isolierung (10) umfasst ist und auf der dritten elektrischen Isolierung (10) ein Neutralleiter (11) mit kreisförmigem Querschnitt aufliegt.

2. Kabel nach Anspruch 1, **dadurch gekennzeichnet, dass** die Kabelseele aus dem inneren Kühlkanal (1), dem ersten supraleitenden Phasenleiter (2), der ersten elektrischen Isolierung (5), dem zweiten supraleitenden Phasenleiter (3), der zweiten elektrischen Isolierung (6) und dem dritten supraleitenden Phasenleiter (4) besteht.

3. Kabel nach einem der voranstehenden Ansprüche, **dadurch gekennzeichnet, dass** zwischen dem inneren Kühlkanal (1) und dem ersten supraleitenden Phasenleiter (2) eine Schutzschicht (13) aus metallischem und/oder isolierendem Material angeordnet ist.

4. Kabel nach einem der voranstehenden Ansprüche, **dadurch gekennzeichnet, dass** auf dem dritten supraleitenden Phasenleiter (4) eine Schutzschicht (12) aus metallischem und/oder isolierenden Material aufgebracht ist.

5. Kabel nach einem der Ansprüche 3 oder 4, **dadurch gekennzeichnet, dass** das isolierende Material jeder Schutzschicht (12, 13) unabhängig Papier und/oder Rußpapier ist, das metallische Material der Schutzschicht (12) ein um den dritten supraleitenden Phasenleiter (4) gewickeltes Bronzeband ist und dass die Schutzschicht (13) Bänder aus Edelstahl enthält.

6. Kabel nach einem der voranstehenden Ansprüche, **dadurch gekennzeichnet, dass** auf dem Neutralleiter (11) eine Schicht aus isolierendem Material (14) aufgebracht ist.

7. Kabel nach einem der voranstehenden Ansprüche, **dadurch gekennzeichnet, dass** der Neutralleiter (11) aus dem die äußere Schicht des Kabels bildenden metallischen Neutralleiter (11) besteht.

8. Kabel nach einem der voranstehenden Ansprüche, **dadurch gekennzeichnet, dass** die erste und zweite elektrische Isolierung (5, 6) aus gewickelten, für ein Kühlmedium durchlässigen Papierlagen bestehen.

9. Kabel nach einem der voranstehenden Ansprüche, **dadurch gekennzeichnet, dass** die dritte Isolierung (10) ein um den Kryostat extrudiertes oder gewickeltes Polymer aufweist oder daraus besteht.

10. Kabel nach einem der voranstehenden Ansprüche, **dadurch gekennzeichnet, dass** der Neutralleiter (11) aus verseilten Bändern aus kupferhaltigem Material besteht oder ein längs geschweißtes Metallrohr zylindrischen Umfangs oder mit wendelförmiger oder ringförmiger Wellung ist.

11. Verfahren zur Herstellung eines supraleitenden Kabels durch Herstellung einer Kabelseele und Anordnung der Kabelseele in einem Kryostat (9), **dadurch gekennzeichnet, dass** die Herstellung der Kabelseele das Anordnen von supraleitfähigen Bändern um einen als inneren Kühlkanal (1) bereitgestellten Trägers mit ringförmigem Querschnitt zur Erzeugung eines ersten supraleitfähigen Phasenleiters (2), Anordnen einer ersten Isolierung (5) um den ersten supraleitfähigen Phasenleiter (2), Anordnen von supraleitfähigen Bändern um die erste Isolierung (5) zur Erzeugung eines zweiten supraleitfähigen Phasenleiters (3), Anordnen einer zweiten Isolierung (6) um den zweiten supraleitfähigen Phasenleiter (3) und Anordnen von supraleitfähigen Bändern um die zweite Isolierung (6) zur Erzeugung eines dritten supraleitfähigen Phasenleiters (4) umfässt **dadurch gekennzeichnet, dass**, eine dritte elektrische Isolierung (10) um den Kryostat (10) angeordnet wird und auf der dritten elektrischen Isolierung (10) ein Metallmantel als gemeinsamer Neutralleiter (11) für die supraleitfähigen Phasenleiter (2, 3, 4) angeordnet wird.

12. Verfahren nach Anspruch 11, **dadurch gekennzeichnet, dass** die Kabelseele aus dem inneren Kühlkanal (1), dem ersten supraleitenden Phasenleiter (2), der ersten elektrischen Isolierung (5), dem zweiten supraleitenden Phasenleiter (3), der zweiten elektrischen Isolierung (6) und dem dritten supraleitenden Phasenleiter (4) besteht.

13. Verfahren nach einem der Ansprüche 11 bis 12, **dadurch gekennzeichnet, dass** die dritte elektrische Isolierung (10) durch Umspritzen des Kryostats (9) mit einem vernetzbaren Kunststoff hergestellt wird.

14. Verfahren nach einem der Ansprüche 11 bis 13, **dadurch gekennzeichnet, dass** vor dem Anordnen von supraleitfähigen Bändern um den inneren Kühlkanal (1) zur Erzeugung eines ersten supraleitfähigen Phasenleiters (2) eine Schutzschicht (13) auf dem inneren Kühlkanal (1) angeordnet wird.

15. Verfahren nach einem der Ansprüche 11 bis 14, **dadurch gekennzeichnet, dass** nach dem Anordnen von supraleitfähigen Bändern um die zweite Isolierung (6) zur Erzeugung eines dritten supraleitfähigen Phasenleiters (4) eine Schutzschicht (12) auf dem dritten supraleitfähigen Phasenleiter (4) angeordnet wird.

16. Verfahren nach einem der Ansprüche 11 bis 15, **dadurch gekennzeichnet, dass** nach dem Anordnen des Neutralleiters (11) eine weitere Schutzschicht (14) um den Neutralleiter (11) angeordnet wird.

## Claims

1. Superconductive cable comprising a cryostat (9) and a cable core arranged therein and having, concentrically around an inner cooling duct (1) from the inside to the outside, a first superconductive phase conductor (2), a first electrical insulation (5), a second superconductive phase conductor (3), a second electrical insulation (6) and a third superconductive phase conductor (4), **characterized in that** the cryostat (9) is surrounded by a third electrical insulation (10), and a neutral conductor (11) with a circular cross section lies on the third electrical insulation (10).

2. Cable according to claim 1, **characterized in that** the cable core consists of the inner cooling duct (1), the first superconductive phase conductor (2), the first electrical insulation (5), the second superconductive phase conductor (3), the second electrical insulation (6) and the third superconductive phase conductor (4).

3. Cable according to one of the preceding claims, **characterized in that** a protective layer (13) of metallic and/or insulating material is arranged between the inner cooling duct (1) and the first superconductive phase conductor (2).

4. Cable according to one of the preceding claims, **characterized in that** a protective layer (12) of metallic and/or insulating material has been applied to the third superconductive phase conductor (4).

5. Cable according to either of claims 3 and 4, **characterized in that** the insulating material of each protective layer (12, 13) independently is paper and/or soot paper, the metallic material of the protective layer (12) is a bronze band wound around the third superconductive phase conductor (4) and **in that** the protective layer (13) contains bands of high-grade steel.

6. Cable according to one of the preceding claims, **characterized in that** a layer of insulating material (14) has been applied to the neutral conductor (11).

7. Cable according to one of the preceding claims, **characterized in that** the neutral conductor (11) consists of the metallic neutral conductor (11) forming the outer layer of the cable.

8. Cable according to one of the preceding claims, **characterized in that** the first and second electrical insulations (5, 6) consist of wound layers of paper permeable to a cooling medium.

9. Cable according to one of the preceding claims, **characterized in that** the third insulation (10) comprises or consists of a polymer extruded or wound around the cryostat.

10. Cable according to one of the preceding claims, **characterized in that** the neutral conductor (11) consists of stranded bands of copper-containing material, or is a longitudinally welded metal pipe of a cylindrical circumference or with a helical or annular corrugation.

11. Method for producing a superconductive cable by producing a cable core and arranging the cable core in a cryostat (9), **characterized in that** the production of the cable core comprises arranging superconductive ribbons around a carrier with an annular cross section, provided as an inner cooling duct (1), for producing a first superconductive phase conductor (2), arranging a first insulation (5) around the first superconductive phase conductor (2), arranging superconductive ribbons around the first insulation (5) for producing a second superconductive phase conductor (3), arranging a second insulation (6) around the second superconductive phase conductor (3) and arranging superconductive ribbons around the second insulation (6) for producing a third superconductive phase conductor (4), **characterized in that** a third electrical insulation (10) is arranged around the cryostat (10), and a metal casing is arranged on the third electrical insulation (10) as a common neutral conductor (11) for the superconductive phase conductors (2, 3, 4).

12. Method according to claim 11, **characterized in that** the cable core consists of the inner cooling duct (1), the first superconductive phase conductor (2), the first electrical insulation (5), the second superconductive phase conductor (3), the second electrical insulation (6), and the third superconductive phase conductor (4).

13. Method according to either of claims 11 and 12, **characterized in that** the third electrical insulation (10) is produced by injection-moulding a crosslinkable plastic around the cryostat (9).

14. Method according to one of claims 11 to 13, **characterized in that**, before arranging superconductive ribbons around the inner cooling duct (1) for producing a first superconductive phase conductor (2), a protective layer (13) is arranged on the inner cooling duct (1).

15. Method according to one of claims 11 to 14, **characterized in that**, after arranging superconductive ribbons around the second insulation (6) for producing a third superconductive phase conductor (4), a protective layer (12) is arranged on the third superconductive phase conductor (4).

16. Method according to one of claims 11 to 15, **characterized in that**, after arranging the neutral conductor (11), a further protective layer (14) is arranged around the neutral conductor (11).

## Revendications

1. Câble supraconducteur comprenant un cryostat (9) et une âme de câble disposée à l'intérieur de celui-ci, qui présente un premier conducteur de phase supraconducteur (2), une première isolation électrique (5), un deuxième conducteur de phase supraconducteur (3), une deuxième isolation électrique (6) et un troisième conducteur de phase supraconducteur (4), disposés concentriquement de l'intérieur vers l'extérieur autour d'un canal de refroidissement interne (1), **caractérisé en ce que** le cryostat (9) est entouré par une troisième isolation électrique (10) et un conducteur neutre (11) de section transversale circulaire repose sur la troisième isolation électrique (10).

2. Câble selon la revendication 1, **caractérisé en ce que** l'âme de câble se compose du canal de refroidissement interne (1), du premier conducteur de phase supraconducteur (2), de la première isolation électrique (5), du deuxième conducteur de phase supraconducteur (3), de la deuxième isolation électrique (6) et du troisième conducteur de phase supraconducteur (4).

3. Câble selon l'une quelconque des revendications précédentes, **caractérisé en ce qu'**entre le canal de refroidissement interne (1) et le premier conducteur de phase supraconducteur (2) est disposée une couche de protection (13) en matériau métallique et/ou isolant.

4. Câble selon l'une quelconque des revendications précédentes, **caractérisé en ce qu'**une couche de protection (12) en matériau métallique et/ou isolant est appliquée sur le troisième conducteur de phase supraconducteur (4).

5. Câble selon l'une quelconque des revendications 3 ou 4, **caractérisé en ce que** le matériau isolant de chaque couche de protection (12, 13) est, indépendamment, du papier et/ou du papier carbone, le matériau métallique de la couche de protection (12) est une bande de bronze enroulée autour du troisième conducteur de phase supraconducteur (4) et **en ce que** la couche de protection (13) contient des bandes d'acier inoxydable.

6. Câble selon l'une quelconque des revendications précédentes, **caractérisé en ce qu'**une couche en matériau isolant (14) est appliquée sur le conducteur neutre (11).

7. Câble selon l'une quelconque des revendications précédentes, **caractérisé en ce que** le conducteur neutre (11) se compose du conducteur neutre (11) métallique formant la couche extérieure du câble.

8. Câble selon l'une quelconque des revendications précédentes, **caractérisé en ce que** la première et la deuxième isolation électrique (5, 6) se composent de couches de papier enroulées, perméables à un milieu de refroidissement.

9. Câble selon l'une quelconque des revendications précédentes, **caractérisé en ce que** la troisième isolation (10) présente ou se compose d'un polymère extrudé ou enroulé autour du cryostat.

10. Câble selon l'une quelconque des revendications précédentes, **caractérisé en ce que** le conducteur neutre (11) se compose de bandes câblées en matériau contenant du cuivre ou est un tube métallique soudé longitudinalement de périphérie cylindrique ou ayant une ondulation en forme d'hélice ou de forme annulaire.

11. Procédé de fabrication d'un câble supraconducteur par fabrication d'une âme de câble et agencement de l'âme de câble dans un cryostat (9), **caractérisé en ce que** la fabrication de l'âme de câble comprend l'agencement de bandes supraconductrices autour d'un support de section annulaire fourni en tant que canal de refroidissement interne (1) pour produire un premier conducteur de phase supraconducteur (2), l'agencement d'une première isolation (5) autour du premier conducteur de phase supraconducteur (2), l'agencement de bandes supraconductrices autour de la première isolation (5) pour produire un deuxième conducteur de phase supraconducteur (3), l'agencement d'une deuxième isolation (6) autour du deuxième conducteur de phase supraconducteur (3) et l'agencement de bandes supraconductrices autour de la deuxième isolation (6) pour produire un troisième conducteur de phase supraconducteur (4), **caractérisé en ce qu'**une troisième isolation électrique (10) est disposée autour du cryostat (9) et une gaine métallique en tant que conducteur neutre commun (11) pour les conducteurs de phase supraconducteurs (2, 3, 4) est disposée sur la troisième isolation électrique (10).

12. Procédé selon la revendication 11, **caractérisé en ce que** l'âme de câble se compose du canal de refroidissement interne (1), du premier conducteur de phase supraconducteur (2), de la première isolation électrique (5), du deuxième conducteur de phase supraconducteur (3), de la deuxième isolation électrique (6) et du troisième conducteur de phase supraconducteur (4).

13. Procédé selon l'une quelconque des revendications 11 à 12, **caractérisé en ce que** la troisième isolation électrique (10) est fabriquée par surmoulage du cryostat (9) avec une matière plastique réticulable.

14. Procédé selon l'une quelconque des revendications 11 à 13, **caractérisé en ce qu'**avant l'agencement de bandes supraconductrices autour du canal de refroidissement interne (1) pour produire un premier conducteur de phase supraconducteur (2), une couche de protection (13) est disposée sur le canal de refroidissement interne (1).

15. Procédé selon l'une quelconque des revendications 11 à 14, **caractérisé en ce qu'**après l'agencement de bandes supraconductrices autour de la deuxième isolation (6) pour produire un troisième conducteur de phase supraconducteur (4), une couche de protection (12) est disposée sur le troisième conducteur de phase supraconducteur (4).

16. Procédé selon l'une quelconque des revendications 11 à 15, **caractérisé en ce qu'**après l'agencement du conducteur neutre (11), une couche de protection supplémentaire (14) est disposée autour du conducteur neutre (11).
